# EUROPÄISCHE PATENTSCHRIFT

(11) **EP 4 389 654 B1**
(45) Veröffentlichungstag und Bekanntmachung des Hinweises auf die Patenterteilung: **08.10.2025**
(21) Anmeldenummer: 23207501.0
(22) Anmeldetag: 02.11.2023
(51) Int. Cl.: B65G 47/244

(54) **ÜBERGABEEINHEIT UND ÜBERGABESYSTEM ZUR ÜBERGABE EINES POSTSTÜCKS VON EINER ZUFUHREINHEIT ZU EINER ABTRANSPORTEINHEIT UND ÜBERGABEVERFAHREN**
TRANSFER UNIT AND TRANSFER SYSTEM FOR TRANSFERRING A MAIL ITEM FROM A FEED UNIT TO A TRANSPORT UNIT AND TRANSFER METHOD
UNITÉ DE TRANSFERT ET SYSTÈME DE TRANSFERT POUR TRANSFÉRER UN ARTICLE POSTAL D'UNE UNITÉ D'ALIMENTATION À UNE UNITÉ DE TRANSFERT ET PROCÉDÉ DE TRANSFERT

(30) Priorität: 21.12.2022 DE 102022134266
(43) Veröffentlichungstag der Anmeldung: 26.06.2024
(73) Patentinhaber: BÖWE SYSTEC GmbH, 86159 Augsburg (DE)
(72) Erfinder: Celeste, Ronald, 86707 Kühlenthal (DE); Glaß, Philipp, 86453 Dasing (DE)
(74) Vertreter: Charrier Rapp & Liebau

(56) Entgegenhaltungen:
- WO-A2-98/49083
- DE-A1- 1 907 123
- JP-A- H03 267 214
- JP-A- H11 322 055
- JP-A- S5 266 269
- JP-U- H02 115 319
- US-A- 3 747 781
- US-A- 4 682 682
- US-A- 5 052 541
- US-A1- 2003 015 399

## Beschreibung

Die Erfindung betrifft eine Übergabeeinheit zur Aufnahme eines Poststücks von einer Zufuhreinheit und zur Übergabe des Poststücks an eine Abtransporteinheit nach dem Oberbegriff des Anspruchs 1, ein Übergabesystem mit einer solchen Übergabeeinheit und ein Übergabeverfahren.

Zur Verarbeitung von Poststücken, wie beispielsweise Paketen oder Versandbeuteln, müssen die Poststücke zu einer entsprechenden Weiterverarbeitungsvorrichtung zugeführt werden. Bei der Weiterverarbeitungsvorrichtung kann es sich beispielsweise um eine Sortiervorrichtung handeln, durch die die Poststücke vor einem Versenden an einen bestimmten Adressaten zunächst nach einem bestimmten Sortierkriterium, beispielsweise der Zustelladresse, sortiert werden. Die Sortiervorrichtung kann dabei beispielsweise mehrere, entlang eines Sortierpfads bewegte Ablagen zur Aufnahme und zum Transport der Poststücke zu einer Sortierendstelle aufweisen. Beim Zuführen der Poststücke zu der Weiterverarbeitungsvorrichtung werden die Poststücke üblicherweise von einer Auflegestelle entlang eines Transportpfads zu der Weiterverarbeitungsvorrichtung transportiert. Der Transportpfad kann dabei durch ein Transportsystem, umfassend mehrere in Richtung des Transportpfads gesehen hintereinander angeordnete Transporteinheiten, erfolgen. Beispielsweise können die Transporteinheiten dabei an ihrer Übergabestelle in einem bestimmten Winkel zueinander stehen, so dass an der Übergabestelle eine Richtungsänderung des Poststücks erfolgt. Die Transporteinheiten können dabei jedoch auch parallel bzw. so zu einander angeordnet sein, dass bei der Übergabe des Poststücks auf die nachfolgende Transporteinheit keine Änderung der Richtung erfolgt.

Bei derartigen Transportsystemen besteht das Erfordernis, dass ein Poststück für dessen Weitertransport eine vorgegebene Ausrichtung bzw. Orientierung aufweist. Dies kann beispielsweise erforderlich sein, um eine ordnungsgemäße Eingabe in eine Ablage einer nachgeschalteten Sortiervorrichtung zu erzielen. Zudem kann bei derartigen Transportsystemen das Problem bestehen, dass die Weiterverarbeitungsvorrichtung oder eine einer Transporteinheit entlang des Transportpfads gesehen nachfolgende Transporteinheit zur Übernahme eines Poststücks noch nicht bereit ist. Dies kann beispielsweise dann der Fall sein, wenn die Weiterverarbeitungsvorrichtung bzw. die Transporteinheit noch durch ein vorangegangenes Poststück belegt ist. Weiter besteht das Erfordernis, dass ein Paket zu einer genau bestimmten Zeit an die Weiterverarbeitungseinrichtung bzw. einer dieser vorgeschalteten Transporteinheit übergeben werden muss, beispielsweise um ordnungsgemäß in eine entsprechende Ablage einer Sortiervorrichtung eingegeben zu werden. Zur passenden bzw. zielgenauen Übergabe der Poststücke an die Weiterverarbeitungsvorrichtung bzw. an eine nachfolgende Transporteinheit besteht beispielsweise die Möglichkeit, das Transportsystem bzw. eine vorangehende Transporteinheit kurzzeitig zu verlangsamen oder anzuhalten. Allerdings ist eine derartige Verzögerung fehleranfällig, so dass eine ungewollte bzw. ungenaue Zufuhr des Poststücks zu der Weiterverarbeitungsvorrichtung bzw. der nachfolgenden Transporteinheit auftreten kann. Weiter erfordert eine Verlangsamung bzw. ein Anhalten einer Transporteinheit und das anschließende erneute Beschleunigen auf eine vorgegebene Transportgeschwindigkeit eine gewisse Zeit, so dass der Durchsatz an Poststücken reduziert wird.

Es besteht daher die Aufgabe, eine Übergabeeinheit sowie ein Übergabesystem zur Übergabe eines Poststücks von einer Zufuhreinheit zu einer Abtransporteinheit bereitzustellen, die eine ordnungsgemäße und zeitgenaue Übergabe des Poststücks an die Abtransporteinheit bei möglichst hohem Durchsatz an Poststücken ermöglicht. Weiter besteht die Aufgabe darin ein entsprechendes Übergabeverfahren bereitzustellen. US 5 052 541 A offenbart eine Übergabeeinheit gemäß dem Oberbegriff des Anspruchs 1.

Gelöst wird diese Aufgabe mit einer Übergabeeinheit gemäß Anspruch 1, einem Übergabesystem nach Anspruch 9 sowie einem Übergabeverfahren nach Anspruch 10.

Vorteilhafte Ausgestaltungen und zweckmäßige Weiterbildungen der Erfindung sind den Unteransprüchen entnehmbar.

Die erfindungsgemäße Übergabeeinheit dient zur Aufnahme eines Poststücks, insbesondere eines Pakets oder Versandbeutels, von einer Zufuhreinheit und zur Übergabe des Poststücks an eine Abtransporteinheit. Über die Zufuhreinheit wird das Poststück dabei entlang einer Zufuhrrichtung der Übergabeeinheit zugeführt. Die Zufuhreinheit und die Übergabeeinheit können sich dabei auf derselben Höhe befinden. Alternativ ist es aber auch möglich, dass die Zufuhreinheit und die Übergabeeinheit einen Höhenunterschied aufweisen, insbesondere derart, dass ein Poststück bei Zufuhr zu der Übergabeeinheit ein Stück nach unten auf die Übergabeeinheit fällt. Zum Transport des Poststücks entlang einer Transportrichtung zu der Abgabeeinheit weist die Übergabeeinheit eine Transportvorrichtung, beispielsweise ein oder mehrere Transportbänder oder Transportrollen, auf. Die Transportrichtung kann dabei insbesondere parallel zu der Zufuhrrichtung sein oder einen Winkel zu dieser aufweisen. Weiter weist die Übergabeeinheit eine Ausricht- und Rückhalteeinheit mit zumindest einer Anlegekante zum Ausrichten zumindest einer Kante des von der Zufuhreinheit an die Übergabeeinheit übergebenen Poststücks relativ zu der Transportrichtung auf. Durch die Ausricht- und Rückhalteeinheit wird das Poststück dabei derart angeordnet, dass die Ausrichtung des Poststücks einer für den Weitertransport durch die Abtransporteinheit gewünschten Ausrichtung bzw. Orientierung entspricht. Beispielsweise kann das Poststück so ausgerichtet werden, dass dieses in eine Ablage einer der Abtransporteinheit nachgeschalteten Sortiervorrichtung ordnungsgemäß eingegeben werden kann. Weiter ist die Ausricht- und Rückhalteeinheit derart ausgebildet, dass das an die Übergabeeinheit übergebene Poststück bei (fortwährendem) Antrieb der Transportvorrichtung gemäß einem Transport des Poststücks in Transportrichtung zwischenzeitlich an einer Bewegung in Transportrichtung gehindert werden kann. Ein fehleranfälliges und den Durchsatz verringerndes Verlangsamen oder gar ein Anhalten der Transportvorrichtung ist dabei nicht erforderlich. Sobald die Abtransporteinheit oder eine der Abtransporteinheit nachgeschaltete Weiterverarbeitungsvorrichtung zur Aufnahme bereit ist, kann das Poststück genau zu einem passenden bzw. vorgegebenen Zeitpunkt von der Ausricht- und Rückhalteeinheit freigegeben und entlang der Transportrichtung zu der Abtransporteinheit abtransportiert werden.

In einer bevorzugten Ausgestaltung weist die Übergabeeinheit eine Steuereinrichtung zum Ansteuern der Transportvorrichtung und/oder der Ausricht- und Rückhalteeinheit auf. Die Steuereinrichtung kann dabei insbesondere eingerichtet sein, die Transportvorrichtung während des zwischenzeitlichen Zurückhaltens des Poststücks durch die Ausricht- und Rückhalteeinheit, insbesondere während des gesamten Übergabeprozesses des Poststücks, zu einem Transport des Poststücks in Richtung der Transportrichtung anzutreiben. Die Steuereinrichtung kann auch dazu eingerichtet sein, die Ausricht- und Rückhalteeinheit zur Einnahme einer Rückhalteposition, in der das Poststück an einer Bewegung in Transportrichtung gehindert wird, und einer Freigabeposition, in der eine Bewegung des Poststücks in Transportrichtung erfolgen kann, anzusteuern. Weiter kann die Steuereinrichtung auch mit der Zufuhreinheit und/oder der Abtransporteinheit sowie einer der Abtransporteinheit nachgeschalteten Weiterverarbeitungsvorrichtung verbunden sein. Durch die Steuereinrichtung kann die Übergabeeinheit insbesondere so angesteuert werden, dass eine Übergabe eines Poststücks an die Abtransporteinheit genau zu dem gewünschten Zeitpunkt erfolgt.

In einer vorteilhaften Ausgestaltung kann die Übergabeeinheit eine Sensoreinheit, insbesondere eine mit der Steuereinrichtung verbundene Sensoreinheit, aufweisen, über die ein auf oder an der Ausricht- und Rückhalteeinheit angeordnetes Poststücks erfasst werden kann. Insbesondere kann die Sensoreinheit dabei das Anliegen eines Poststücks an der zumindest einen Anlegekante der Ausricht- und Rückhalteeinheit erfassen. Bei der Sensoreinheit kann es sich beispielsweise um einen optischen Sensor, wie beispielsweise eine Lichtschranke oder eine Kamera, oder um einen mechanischen Sensor handeln. Durch die Sensoreinheit kann insbesondere erfasst werden, dass ein für den Weitertransport an die Abtransporteinheit vorgesehenes und durch die Anlegekante ausgerichtetes Poststück bereitsteht, so dass die Übergabeeinheit zu einem entsprechenden Zeitpunkt zum Abtransport des Poststücks durch die Transportvorrichtung angesteuert werden kann.

Gemäß einer ersten Option der Erfindung weist die Ausricht- und Rückhalteeinheit eine oberhalb der Transportvorrichtung angeordnete Auflage bzw. einen Auflageboden auf, auf die das Poststück bei Zufuhr von der Zufuhreinheit zunächst aufgelegt wird, bevor das Poststück in einem nachfolgenden Schritt auf die Transportvorrichtung aufgegeben wird. Gemäß der ersten Option der Erfindung ist die Auflage dabei relativ zur Transportvorrichtung entlang einer Einfahrrichtung zwischen einer ausgefahrenen Position und einer eingefahrenen Position verschiebbar. Die Einfahrrichtung ist dabei parallel zur Transportrichtung. Die Bewegung der Auflage ist dabei insbesondere durch eine Steuereinrichtung der Übergabeeinheit steuerbar. Die Ausricht- und Rückhalteeinheit umfasst bei dieser ersten Option der Erfindung weiter eine Anlegeeinheit, die die zumindest eine Anlegekante aufweist, wobei ein auf die Auflage aufgelegtes Poststück bei der Bewegung der Auflage in die eingefahrene Position zumindest kurzzeitig an dieser Kante anliegt. Die Auflage wird bei der Bewegung in die eingefahrene Position bevorzugt zumindest teilweise unter die Anlegeeinheit verschoben. Durch das Anliegen des Poststücks an der Anlegekante erfolgt das Ausrichten des Poststücks. Weiter wird das Poststück, sobald die Auflage weit genug eingefahren ist, auf die unter der Auflage angeordnete Transportvorrichtung aufgegeben und kann durch diese entlang der Transportrichtung abtransportiert werden. Nach erfolgtem Abtransport des Poststücks wird die Auflage wieder ausgefahren, um das Auflegen eines nachfolgenden Poststücks zu ermöglichen. Die ausgefahrene Position der Auflage stellt folglich die Rückhalteposition dar, in der das Poststück an einer Bewegung in Transportrichtung gehindert wird. Die eingefahrene Position stellt hingegen die Freigabeposition dar, in der eine Bewegung des Poststücks in Transportrichtung erfolgen kann.

Vorteilhafterweise weist die Anlegeeinheit dieser ersten Ausgestaltung zwei im Wesentlichen rechtwinklig zueinander stehende Anlegekanten auf. Die Anlegekanten sind dabei bevorzugt nicht parallel zur Einfahrrichtung der Auflage angeordnet. Besonders bevorzugt schließen die Anlegekanten dabei jeweils einen Winkel von 30° bis 60°, insbesondere von etwa 45°, mit der Einfahrrichtung der Auflage ein. Durch die genannte Ausgestaltung und Anordnung der Anlegekanten ist eine besonders vorteilhafte Ausrichtung des Poststücks bei der Bewegung der Auflage in die eingefahrene Position gegeben.

In einer weiteren vorteilhaften Ausgestaltung der Übergabeeinheit weist die Ausricht- und Rückhalteeinheit ein Anschiebelement auf, insbesondere ein durch die Steuereinrichtung der Übergabeeinheit ansteuerbares Anschiebelement. Durch dieses Anschiebelement kann eine Bewegung des Poststücks von der Auflage auf die Transportvorrichtung bewirkt und/oder die Bewegung des Poststücks in die Transportrichtung unterstützt bzw. das Poststück kurzzeitig angeschoben und ergänzend zur Bewegung durch die Transportvorrichtung in die Transportrichtung bewegt werden. Hierdurch kann insbesondere der gewünschte Abtransport des Poststücks erzielt werden. Beispielsweise kann dadurch auch eine anfängliche Verzögerung des Abtransports des Poststücks infolge von dessen Aufgabe auf die Transportvorrichtung bzw. eine verzögerte Beschleunigung des Poststücks ausgeglichen werden. Weiter kann dadurch auch eine Verzögerung, die beispielsweise durch einen "Schlupf" infolge einer anfänglich nicht ausreichenden Reibung zwischen dem Poststück und der Transportvorrichtung auftreten kann, entgegengewirkt werden. In einer besonders bevorzugten Ausgestaltung kann die Anlegeeinheit das Anschiebelement bildet. Speziell können dabei die Anlegekanten verschiebbar ausgebildet sein, insbesondere relativ zur Transportrichtung. Das Vorsehen eines zusätzlichen Anschiebelements ist hierbei nicht zwingend erforderlich.

In einer zweiten Ausgestaltung der Übergabeeinheit gemäß einer zweiten Option der Erfindung wird das von der Zufuhreinheit zugeführte Poststück unmittelbar auf die Transportvorrichtung aufgegeben bzw. aufgelegt. Die Ausricht- und Rückhalteeinheit dieser Ausgestaltung der Übergabeeinheit weist dabei zumindest ein die zumindest eine Anlegekante aufweisendes, oberhalb der Transportvorrichtung angeordnetes Rückhalteelement auf. Das Rückhalteelement ist dabei zwischen einer Rückhalteposition, in der das Poststück an einer Bewegung in Transportrichtung gehindert wird, und einer Freigabeposition, in der eine Bewegung des Poststücks in Transportrichtung erfolgen kann, bewegbar. In dieser Ausgestaltung ist das zumindest eine Rückhalteelement dabei um eine Rotationsachse, bevorzugt eine senkrecht zur Transportrichtung verlaufende Rotationsachse, verschwenkbar. Speziell wird das durch die Zufuhreinheit auf die Transportvorrichtung aufgelegte Poststück zunächst durch die Transporteinheit bis an die zumindest eine Anlegekante des zumindest einen in Rückhalteposition angeordneten Rückhalteelements befördert, an der das Poststück zum zwischenzeitlichen Zurückhalten anliegt. Durch das Anliegen an der zumindest einen Anlegekante wird das Poststück ausgerichtet. Weiter wird das auf der Transportvorrichtung aufliegende Poststück durch das Anliegen an der zumindest einen Anlegekante an einem Weitertransport in Transportrichtung auch bei weiter angetriebener Transportvorrichtung gehindert. Zu einem passenden Zeitpunkt wird das zumindest eine Rückhalteelement in die Freigabeposition bewegt, wodurch der Abtransport des Poststücks durch die Transportvorrichtung entlang der Transportrichtung zu der Abtransporteinheit erfolgt. Durch die genannte Ausgestaltung erfolgt auf vorteilhafte Weise eine Ausrichtung des Poststücks. Weiter ist durch das Zurückhalten des Poststücks durch das in Rückhalteposition angeordnete Rückhalteelement eine fehleranfällige und den Durchsatz an verarbeiteten Poststücken beeinträchtigenden Verlangsamung oder ein Anhalten der Transportvorrichtung bis zum vorgesehenen Weitertransport des Poststücks nicht erforderlich.

In der Ausführung dieser zweiten Ausgestaltung der Übergabeeinheit weist die Ausricht- und Rückhalteeinheit zwei jeweils zwischen einer Rückhalteposition und einer Freigabeposition bewegbare, um eine Rotationsachse verschwenkbare Rückhalteelemente mit jeweils einer Anlegekante auf. Vorteilhafterweise ist die Rotationsachse dabei senkrecht zur Transportrichtung bzw. senkrecht zu der Auflagefläche der Transportvorrichtung, auf der die Poststücke zum Transport in Transportrichtung aufliegen. Gemäß der zweiten Option der Erfindung sind die beiden Anlegekanten bei in Rückhalteposition angeordneten Rückhalteelementen im Wesentlichen senkrecht zueinander angeordnet. Besonders bevorzugt sind die Anlegekanten in der Rückhalteposition der Rückhalteelemente dabei nicht senkrecht oder parallel zur Transportrichtung angeordnet, sondern schließen vorteilhafterweise einen Winkel mit dieser ein, insbesondere einen Winkel zwischen 30° und 60°, besonders bevorzugt jeweils einen Winkel von etwa 45°. Durch die genannte Ausgestaltung erfolgt die Ausrichtung der Poststücke auf vorteilhafte Weise.

Ein erfindungsgemäßes Übergabesystem umfasst zumindest eine der beschriebenen Übergabeeinheiten, eine Zufuhreinheit zur Zuführung des Poststücks entlang einer Zufuhrrichtung zu der Übergabeeinheit sowie eine Abtransporteinheit zum Abtransport des Poststücks entlang einer Abtransportrichtung. Das Übergabesystem weist dabei insbesondere eine Steuereinrichtung zur Steuerung der Übergabeeinheit, der Zufuhreinheit sowie der Abtransporteinheit bzw. deren einzelnen Komponenten auf. Insbesondere ist die Steuereinrichtung eingerichtet, den Transport der einzelnen Poststück zu den jeweiligen Einheiten und weg von diesen (zeitlich) zu koordinieren.

Ein Übergabeverfahren zur Übergabe eines Poststücks, mittels einer der oben beschriebenen Übergabeeinheiten, von einer Zufuhreinheit an eine Abtransporteinheit umfasst die folgenden Schritte:
(a) Zuführen des Poststücks durch die Zufuhreinheit zu der Übergabeeinheit;
(b) Ausrichten des Poststücks durch Anliegen an der zumindest einen Anlegekante sowie zwischenzeitliches Zurückhalten des Poststücks durch die Ausricht- und Rückhalteeinheit, insbesondere bei fortwährendem Antrieb der Transportvorrichtung gemäß einem Transport des Poststücks in Transportrichtung;
(c) Transport des Poststücks durch die Transportvorrichtung entlang der Transportrichtung zu der Abtransporteinheit.

Bevorzugt umfasst das Übergabeverfahren weiter einen Schritt des Erfassens des Anliegens des Poststücks an der zumindest einen Anlegekante vor dem Schritt des Abtransports des Poststücks durch die Transportvorrichtung. Speziell die Ansteuerung der Ausricht- und Rückhalteeinheit zur Bewegung zwischen der Rückhalteposition und der Freigabeposition kann dabei in Abhängigkeit des Erfassens eines an der Anlegekante anliegenden Poststücks erfolgen. Weiter kann durch den genannten Schritt auch ein nicht ordnungsgemäß anliegendes bzw. nicht ordnungsgemäß ausgerichtetes Poststück erkannt und eine entsprechende Fehlermeldung ausgegeben werden.

Weiter kann das Zurückhalten des Poststücks durch die Ausricht- und Rückhalteeinheit, speziell die in Rückhalteposition angeordnete Ausricht- und Rückhalteeinheit, bis zu einem Zeitpunkt erfolgen, zu dem die Abtransporteinheit und/oder eine der Abtransporteinheit nachgeschaltete Weiterverarbeitungsvorrichtung zur Aufnahme des Poststücks bereit ist. Hierdurch wird die gewünschte ordnungsgemäße Übergabe des Poststücks an die Abtransporteinheit bzw. an eine Weiterverarbeitungsvorrichtung erzielt.

Diese und weitere Merkmale sowie Vorteile und Wirkungen der erfindungsgemäßen Übergabevorrichtung bzw. des erfindungsgemäßen Übergabesystems sowie des erfindungsgemäßen Übergabeverfahrens ergeben sich aus den nachfolgenden unter Bezugnahme auf die begleitenden Zeichnungen näher beschriebenen Ausführungsbeispielen. Die Zeichnungen zeigen:
- **Fig. 1**: eine Skizze einer ersten Ausführungsform eines Übergabesystems;
- **Fig. 2**: eine Skizze der Übergabeeinheit des Übergabesystems aus Fig. 1;
- **Fig. 3**: eine Skizze eines zweiten Übergabesystems zu einem ersten Zeitpunkt der Übergabe eines Poststücks;
- **Fig. 4**: das Übergabesystems gemäß Fig. 3 zu einem zweiten Zeitpunkt;
- **Fig. 5**: das Übergabesystems gemäß Fig. 3 zu einem dritten Zeitpunkt.

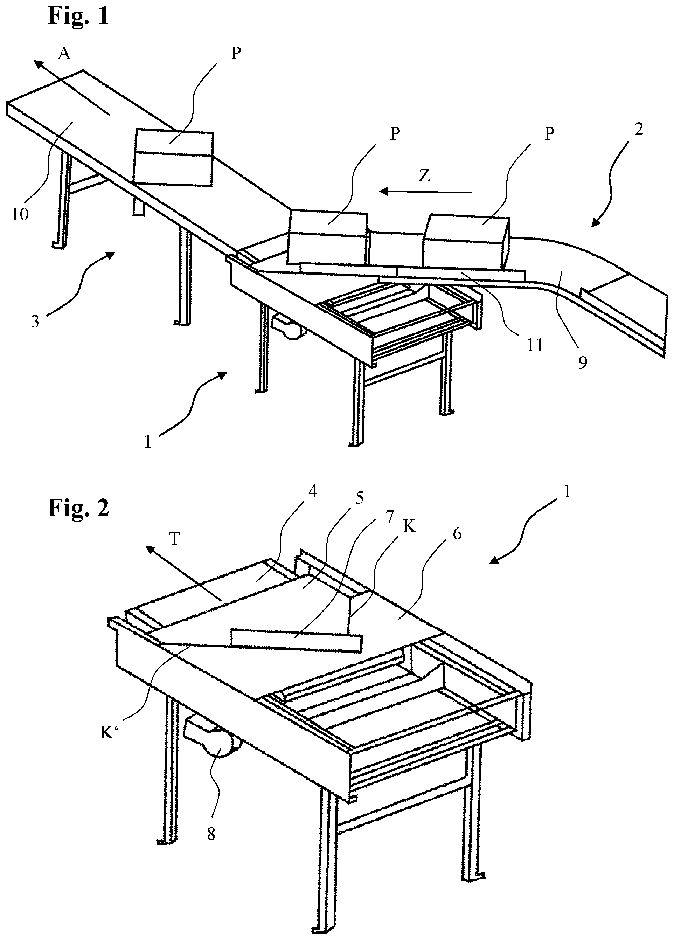

Fig. 1 zeigt eine erste Ausgestaltung des erfindungsgemäßen Übergabesystems umfassend eine Zufuhreinheit 2 zur Zuführung eines Poststücks P, insbesondere eines Pakets, entlang einer Zufuhrrichtung Z zu der Übergabeeinheit 1 sowie eine Abtransporteinheit 3 zum Abtransport des Poststücks P entlang einer Abtransportrichtung A. Die Übergabeeinheit 1 des Übergabesystems aus Fig. 1 ist in Fig. 2 im Detail gezeigt. Lediglich der Übersicht halber sind die zu den einzelnen Bauteilen der Übergabeeinheit 1 zugehörigen Bezugszeichen in Fig. 1 nicht eingezeichnet.

Die Zufuhreinheit 2 dient zum Zuführen von Poststücken P von einer nicht gezeigten Auflegestelle, an der die Poststücke P auf die Zufuhreinheit 2 aufgelegt werden, zu der Übergabeeinheit 1. Hierfür weist die Zufuhreinheit 2 eine Zufuhrtransporteinrichtung 9 auf, beispielsweise ein Transportband oder Transportrollen, auf der die Poststücke P aufliegen und zur Übergabeeinheit 1 transportiert werden. Zur sicheren Führung der Poststücke P bzw. zum ordnungsgemäßen Zuführen der Poststücke P zu der Übergabeeinheit 1 kann die Zufuhreinheit 2 dabei eine hier skizzenhaft in Form einer Bande angedeutete Zufuhrhilfe 11 aufweisen.

Die Übergabeeinheit 1 weist, wie in Fig. 2 gezeigt ist, eine Transporteinheit 4, beispielsweise ein Transportband oder Transportrollen, zum Transport eines von der Zufuhreinheit 2 zugeführten Poststücks P in Richtung der Transportrichtung T zu der Abtransporteinheit 3 auf. In dem gezeigten Ausführungsbeispiel ist die Transportrichtung T parallel zur Abtransportrichtung A, wobei auch andere Anordnungen möglich sind. Oberhalb der Transporteinheit 4 ist eine Auflage 5 angeordnet, die insbesondere parallel zu einer Auflagefläche der Transporteinheit 4 verläuft. Weiter weist die Übergabeeinheit 1 eine oberhalb der Auflage 5 angeordnete Anlegeeinheit 6 mit zwei im Wesentlichen senkrecht zueinander angeordneten Anlegekanten K, K' auf. In dem gezeigten Ausführungsbeispiel schließen die Anlegekanten K, K' mit der Transportrichtung T jeweils einen Winkel von etwa 45° ein, wobei auch andere Anordnungen denkbar sind. Die Auflage 5 ist durch eine Antriebseinheit 8 parallel zur Transportrichtung T zwischen einer in Fig. 1 und Fig. 2 gezeigten ausgefahrenen Position und einer nicht dargestellten eingefahrenen Position verschiebbar. Bei der Bewegung in die eingefahrene Position wird die Auflage 5 zumindest teilweise unter die Anlegeeinheit 6 geführt. Die Übergabeeinheit 1 kann weiter eine nicht gezeigte Sensoreinheit aufweisen, durch die ein Anliegen eines Poststücks P an einer oder beiden Anlegekanten K, K' erfasst werden kann.

Bei der Zufuhr eines Poststücks P durch die Zufuhreinheit 2 wird das Poststück P zunächst auf die in ausgefahrener Position angeordnete Auflage 5 aufgegeben. Zur ordnungsgemäßen Zufuhr kann dabei die Anlegeeinheit 6 eine in Fig. 2 skizzenhaft in Form einer Bande angedeutete Einführhilfe 7 aufweisen. Sobald die Abtransporteinheit 2 oder ggf. eine nachfolgende Einheit, beispielsweise eine nachfolgend angeordnete Sortiervorrichtung, zur Aufnahme bereit ist, wird die Auflage 5 durch die Antriebseinheit 8 in die eingefahrene Position verschoben. Hierdurch liegt das auf der Auflage 5 aufgebrachte Poststück P zunächst an den Kanten K, K' an und wird durch diese ausgerichtet bevor es bei weit genug eingefahrener Auflage 5 auf die Transportvorrichtung 4 aufgegeben wird. Über die Transportvorrichtung 4 wird das Poststück P dann anschließend in Transportrichtung T zu der Abtransporteinheit 3 und von dieser entlang der Abtransportrichtung A abtransportiert. Die Abtransporteinheit 3 weist dabei für den Transport des Poststücks P in die Abtransportrichtung A eine Abtransportvorrichtung 10, beispielsweise ein Transportband oder Transportrollen, auf.

In einer denkbaren Ausgestaltung der Übergabe, kann die in ausgefahrener Position angeordnete Auflage 5 mit einem auf dieser aufgegebenen Poststück 5 in einem ersten Schritt nur soweit in Richtung der eingefahrenen Position eingefahren werden, bis das Poststück P an den Anlegekanten K, K' anliegt. Dies kann beispielsweise durch die oben genannte, in den Figuren nicht gezeigte Sensoreinheit erfasst werden. Die Aufgabe auf die Transportvorrichtung 4 kann dabei in einem zweiten Schritt erfolgen, insbesondere zu dem Zeitpunkt, zu dem die Abtransporteinheit 2 oder ggf. eine nachfolgende Einheit zu Aufnahme bereit ist. Hierdurch ist eine präzise bzw. zeitgenaue Aufgabe des Poststücks P auf die Transportvorrichtung 4 und Übergabe an die Abtransporteinheit 3 gegeben.

Durch die Ausgestaltung der zwischen einer ausgefahrenen und einer eingefahrenen Position verschiebbaren Auflage 5, auf der das von der Zufuhreinheit 2 zugeführte Poststück P bis zum für die Übergabe an die Abtransporteinheit 2 passenden Zeitpunkt aufliegt, ist insbesondere auch ein fortwährender Antrieb der Transportvorrichtung 4 in Transportrichtung T möglich. Insbesondere ist ein Anhalten oder Verlangsamen der Transportvorrichtung 4, um eine ordnungsgemäße Übergabe an die Abtransporteinheit 2 zu erzielen, nicht zwingend erforderlich. Weiter erfolgt durch die Anlegeeinheit 6, speziell durch das Anliegen des Poststücks P an den Anlegekanten K, K', ein Ausrichten des Poststücks P gemäß einer für den Weitertransport gewünschten Orientierung.

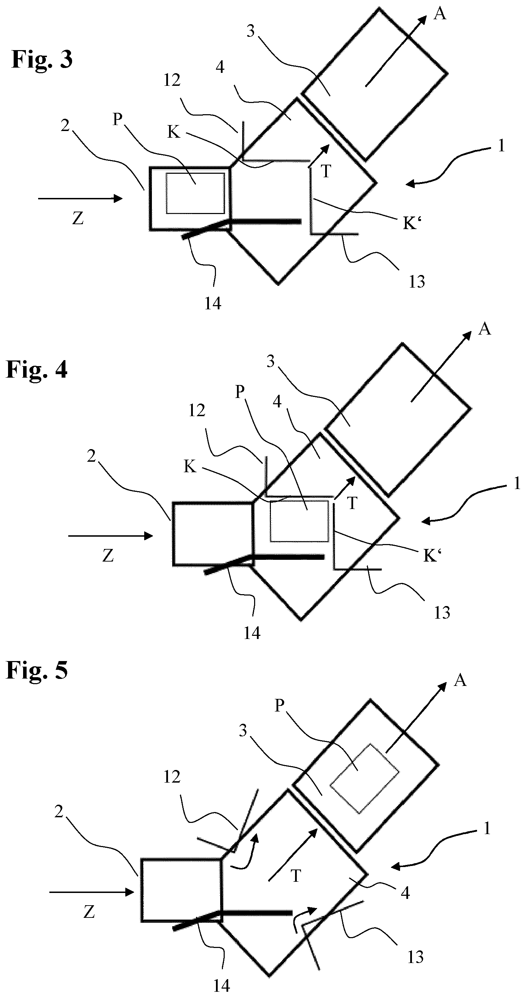

In Fig. 3 bis Fig. 5 ist eine zweite Ausgestaltung des erfindungsgemäßen Übergabesystems zu verschiedenen Zeitpunkt der Übergabe eines Poststücks P skizziert. In den Darstellungen gemäß Fig. 1 bis Fig. 3 sind für die Komponenten, die den Bauteilen aus Fig. 1 bzw. Fig. 2 entsprechen bzw. dieselbe Funktion aufweisen, dieselben Bezugszeichen verwendet.

Wie in Fig. 3 und Fig. 4 skizziert ist, wird ein Poststück P durch die Zufuhreinheit 2 entlang der Zufuhrrichtung Z zu der Übergabeeinheit 1 zugeführt und dort auf die Transportvorrichtung 4 der Übergabeeinheit 1 aufgegeben. Bei der Transportvorrichtung 4 kann es sich insbesondere um ein Transportband oder Transportrollen handeln, durch die der Weitertransport des Poststücks P entlang der Transportrichtung T zu der Abtransporteinheit 3 erfolgt. Zur ordnungsgemäßen Aufgabe des Poststücks P auf die Transportvorrichtung 4 kann die skizzierte Einführhilfe 14 vorgesehen sein.

Zum Zurückhalten und Ausrichten des Poststücks P umfasst die Übergabeeinheit 1 ein erstes und ein zweites oberhalb der Transportvorrichtung 4 angeordnetes Rückhalteelement 12, 13. Die Rückhalteelemente 12, 13 weisen jeweils eine Anlegekante K, K' auf. Weiter sind die Rückhalteelemente 12, 13 dabei zwischen einer in Fig. 3 und Fig. 4 gezeigten Rückhalteposition, in der das Poststück P an einer Bewegung in Transportrichtung T gehindert wird, und einer in Fig. 5 gezeigten Freigabeposition, in der eine Bewegung des Poststücks P in Transportrichtung T erfolgen kann, um eine Rotationsachse verschwenkbar. Wie in Fig. 3 und Fig. 4 gezeigt ist, stehen die Anlegekanten K, K' in Rückhalteposition im Wesentlich senkrecht zueinander und schließen jeweils einen Winkel von etwa 45° mit der Transportrichtung T ein.

Bei Aufgabe des Poststücks P auf die Transportvorrichtung 4 sind die Rückhalteelement 12, 13, wie in Fig. 3 gezeigt ist, in der Rückhalteposition. Infolge des Transports des Poststücks P durch die Transportvorrichtung 4 in die Transportrichtung T kommt das Poststück P, wie in Fig. 4 gezeigt ist, an den Anlegekanten K, K' zum Anliegen. Durch das Anliegen an den Anlegekanten K, K' wird das Poststücks P ausgerichtet. Weiter wird durch die Rückhalteelemente ein Weitertransport des Poststücks P in die Transportrichtung T auch bei einem weiter erfolgenden Antrieb der Transportvorrichtung 4 verhindert. Das Anliegen eines Poststücks an den Anlegekanten K, K' kann insbesondere auch durch eine nicht abgebildete Sensoreinheit erfasst werden. Sobald die Abtransporteinheit 3 oder eine nachfolgende Weiterverarbeitungsvorrichtung zur Aufnahme des Poststücks P bereit ist, werden die Rückhalteelemente 12, 13, wie in Fig. 5 gezeigt ist, in die Freigabeposition verschwenkt, wodurch das Poststück P zunächst durch die Transportvorrichtung 4 in Transportrichtung T zu der Abtransporteinheit 3 und von dieser weiter entlang der Abtransportrichtung A transportiert wird.

Es wird darauf hingewiesen, dass vorliegend lediglich beispielhafte Ausgestaltungen der erfindungsgemäßen Vorrichtung skizziert sind. Insbesondere sind auch weitere Anpassungen, wie beispielsweise das Vorsehen eines Anschiebelements an der Übergabeeinheit, das zum Anschieben bzw. zur anfänglichen Unterstützung der Bewegung des Poststücks bei dem Weitertransport von der Übergabeeinheit an die Abtransporteinheit dient, möglich. Weiter kann beispielsweise auch die Zufuhreinheit oder die Übergabeeinheit weitere Bauteile aufweisen, wie beispielsweise eine Rückhaltevorrichtung, die ein Auflegen eines Poststücks auf eine mit einem Poststück belegte Übergabeeinheit zwischenzeitlich verhindert.

### Bezugszeichen

- 1: Übergabeeinheit
- 2: Zufuhreinheit
- 3: Abtransporteinheit
- 4: Transportvorrichtung
- 5: Auflage
- 6: Anlegeeinheit
- 7: Einführhilfe
- 8: Antriebseinheit
- 9: Zufuhrtransporteinrichtung
- 10: Abtransportvorrichtung
- 11: Zufuhrhilfe
- 12: Erstes Rückhalteelement
- 13: Zweites Rückhalteelement
- 14: Einführhilfe
- A: Abtransportrichtung
- K, K': Anlegekante
- P: Poststück
- T: Transportrichtung
- Z: Zufuhrrichtung

## Patentansprüche

1. Übergabeeinheit (1) zur Aufnahme eines Poststücks (P), insbesondere eines Pakets, von einer Zufuhreinheit (2) und zur Übergabe des Poststücks (P) an eine Abtransporteinheit (3), wobei die Übergabeeinheit (1) eine Transportvorrichtung (4) zum Transport des Poststücks (P) zu der Abtransporteinheit (3) entlang einer Transportrichtung (T) sowie eine Ausricht- und Rückhalteeinheit (5, 6, 12, 13) aufweist, wobei die Ausricht- und Rückhalteeinheit (5, 6, 12, 13) zumindest eine Anlegekante (K, K') zum Ausrichten zumindest einer Kante des von der Zufuhreinheit (2) an die Übergabeeinheit (1) übergebenen Poststücks (P) relativ zu der Transportrichtung (T) aufweist und wobei die Ausricht- und Rückhalteeinheit (5, 6, 12, 13) ausgebildet ist, das an die Übergabeeinheit (1) übergebene Poststück (P) bei Antrieb der Transportvorrichtung (4) zu einem Transport des Poststücks (P) in Transportrichtung (T) zwischenzeitlich an einer Bewegung in Transportrichtung (T) zu hindern,
**dadurch gekennzeichnet , dass** die Ausricht- und Rückhalteeinheit eine oberhalb der Transportvorrichtung (4) angeordnete und relativ zur Transportvorrichtung (4) entlang einer zur Transportrichtung (T) parallelen Einfahrrichtung zwischen einer ausgefahrenen Position und einer eingefahrenen Position verschiebbare Auflage (5) und eine die zumindest eine Anlegekante (K, K') aufweisende Anlegeeinheit (6) aufweist und das Poststück (P) bei Zufuhr von der Zufuhreinheit (2) zunächst auf die Auflage (5) und von dieser auf die Transportvorrichtung (4) aufgegeben wird und bei der Bewegung der Auflage (5) in die eingefahrene Position zumindest kurzzeitig an der Anlegeeinheit (6) anliegt, oder
dass das von der Zufuhreinheit (2) zugeführte Poststück (P) unmittelbar auf die Transportvorrichtung (4) aufgegeben wird und die Ausricht- und Rückhalteeinheit zwei jeweils eine Anlegekante (K, K') aufweisende, oberhalb der Transportvorrichtung (4) angeordnete und jeweils zwischen einer Rückhalteposition, in der das Poststück (P) an einer Bewegung in Transportrichtung (T) gehindert wird, und einer Freigabeposition, in der eine Bewegung des Poststücks (P) in Transportrichtung (T) erfolgen kann, um eine Rotationsachse verschwenkbare Rückhalteelemente (12, 13) aufweist, an denen das Poststück (P) zum zwischenzeitlichen Zurückhalten anliegt, wobei die Anlegekanten (K, K') bei in Rückhalteposition angeordneten Rückhalteelementen (12, 13) im Wesentlich senkrecht zueinander angeordnet sind.

2. Übergabeeinheit (1) nach Anspruch 1, **dadurch gekennzeichnet, dass** die Übergabeeinheit (1) eine Steuereinrichtung zum Ansteuern der Transportvorrichtung (4) aufweist, wobei die Steuereinrichtung eingerichtet ist, die Transportvorrichtung (4) während des zwischenzeitlichen Zurückhaltens des Poststücks (P) durch die Ausricht- und Rückhalteeinheit (5, 6, 12, 13), insbesondere während des gesamten Übergabeprozesses des Poststücks (P), zu einem Transport in Transportrichtung (T) anzutreiben.

3. Übergabeeinheit (1) nach Anspruch 1 oder 2, **dadurch gekennzeichnet, dass** die Übergabeeinheit (1) eine Steuereinrichtung zum Ansteuern der Ausricht- und Rückhalteeinheit (5, 6, 12, 13) aufweist, wobei die Steuereinrichtung eingerichtet ist, die Ausricht- und Rückhalteeinheit (5, 6, 12, 13) zur Einnahme einer Rückhalteposition, in der das Poststück (P) an einer Bewegung in Transportrichtung (T) gehindert wird, und einer Freigabeposition, in der eine Bewegung des Poststücks (P) in Transportrichtung (T) erfolgen kann, anzusteuern.

4. Übergabeeinheit (1) nach einem der voranstehenden Ansprüche **gekennzeichnet durch** eine Sensoreinheit, insbesondere eine mit einer Steuereinrichtung der Übergabeeinheit (1) verbundene Sensoreinheit, zur Erfassung eines auf oder an der Ausricht- und Rückhalteeinheit (5, 6, 12, 13) angeordneten Poststücks (P), insbesondere zur Erfassung eines an der zumindest einen Anlegekante (K, K') anliegenden Poststücks (P).

5. Übergabeeinheit (1) nach einem der voranstehenden Ansprüche, **dadurch gekennzeichnet, dass** die Anlegeeinheit (6) zwei im Wesentlichen rechtwinklig zueinanderstehende Anlegekanten (K, K') aufweist, wobei die Anlegekanten (K, K') bevorzugt nicht parallel zur Einfahrrichtung der Auflage (5) angeordnet sind, insbesondere jeweils einen Winkel von 30 bis 60°, insbesondere von etwa 45° mit der Einfahrrichtung der Auflage (5) einschließen.

6. Übergabeeinheit (1) nach einem der voranstehenden Ansprüche, **dadurch gekennzeichnet, dass** die Ausricht- und Rückhalteeinheit ein Anschiebelement aufweist, insbesondere ein durch eine Steuereinrichtung der Übergabeeinheit (1) ansteuerbares Anschiebelement, zur Bewegung des Poststücks (P) von der Auflage (5) auf die Transportvorrichtung (4) und/oder zur Unterstützung der Bewegung des Poststücks (P) in die Transportrichtung (T).

7. Übergabeeinheit (1) nach einem der voranstehenden Ansprüche, **dadurch gekennzeichnet, dass** die Anlegeeinheit (6) das Anschiebelement bildet und hierfür insbesondere relativ zur Transportrichtung (T) verschiebbar ausgebildet ist.

8. Übergabeeinheit (1) nach einem der Ansprüche 1 bis 4, **dadurch gekennzeichnet, dass** die Rückhalteelemente (12, 13) nicht senkrecht zur Transportrichtung (T) angeordnet sind, bevorzugt einen Winkel zwischen 30° und 60°, besonders bevorzugt jeweils einen Winkel von etwa 45° mit der Transportrichtung (T), einschließen.

9. Übergabesystem umfassend zumindest eine Übergabeeinheit (1) nach einem der voranstehenden Ansprüche, eine Zufuhreinheit (2) zur Zuführung des Poststücks (P), insbesondere eines Pakets, entlang einer Zufuhrrichtung (Z) zu der Übergabeeinheit (1) sowie eine Abtransporteinheit (3) zum Abtransport des Poststücks (P) entlang einer Abtransportrichtung (A).

10. Übergabeverfahren zur Übergabe eines Poststücks (P), insbesondere eines Pakets, mittels einer Übergabeeinheit (1) nach einem der Ansprüche 1 bis 8 von einer Zufuhreinheit (2) an eine Abtransporteinheit (3) umfassend die Schritte:
(a) Zuführen des Poststücks (P) durch die Zufuhreinheit (2) zu der Übergabeeinheit (1);
(b) Ausrichten des Poststücks (P) durch Anliegen an der zumindest einen Anlegekante (K, K') sowie zwischenzeitliches Zurückhalten des Poststücks (P) durch die Ausricht- und Rückhalteeinheit (5, 6, 12, 13), insbesondere bei fortwährendem Antrieb der Transportvorrichtung (4) zu einem Transport des Poststücks (P) in Transportrichtung (T);
(c) Transport des Poststücks (P) durch die Transportvorrichtung (4) entlang der Transportrichtung (T) zu der Abtransporteinheit (3).

11. Übergabeverfahren nach Anspruch 10, **gekennzeichnet durch** einen Schritt des Erfassens des Anliegens des Poststücks (P) an der zumindest einen Anlegekante (K, K') vor dem Abtransport des Poststücks (P) **durch** die Transportvorrichtung (4).

## Claims

1. Transfer unit (1) for receiving a mail item (P), in particular a package, from a feed unit (2) and for transferring the mail item (P) to a removal unit (3), the transfer unit (1) comprising a transport device (4) for transporting the mail item (P) to the removal unit (3) along a transport direction (T), and comprising an alignment and restraint unit (5, 6, 12, 13), the alignment and restraint unit (5, 6, 12, 13) having at least one guide edge (K, K') for aligning, relative to the transport direction (T), at least one edge of the mail item (P) transferred from the feed unit (2) to the transfer unit (1), and the alignment and restraint unit (5, 6, 12, 13) being designed to temporarily prevent the mail item (P) transferred to the transfer unit (1) from moving in the transport direction (T) when the transport device (4) is driven to transport the mail item (P) in the transport direction (T),
**characterized in that**
the alignment and restraint unit has a support (5) which is arranged above the transport device (4) and movable relative to the transport device (4), along a retraction direction in parallel with the transport direction (T), between an extended position and a retracted position, and which alignment and restraint unit has a guide unit (6) having at least one guide edge (K, K'), and the mail item (P) is first placed onto the support (5) when fed from the feed unit (2), and, from there, is placed onto the transport device (4), and rests, at least briefly, against the guide unit (6) when the support (5) moves into the retracted position, or
**in that** the mail item (P) fed from the feed unit (2) is placed directly onto the transport device (4), and the alignment and restraint unit has two restraining elements (12, 13), each having a guide edge (K, K'), arranged above the transport device (4), each of which elements are pivotable about a rotation axis between a restraining position in which the mail item (P) is prevented from moving in the transport direction (T), and a release position in which the mail item (P) can move in the transport direction (T), and against which restraining elements the mail item (P) rests for temporary restraint, the guide edges (K, K') being arranged substantially perpendicularly to one another when the restraining elements (12, 13) are arranged in the restraining position.

2. Transfer unit (1) according to claim 1, **characterized in that** the transfer unit (1) comprises a control apparatus for controlling the transport device (4), the control apparatus being designed to drive the transport device (4) for transport in the transport direction (T) during the temporary restraint of the mail item (P) by means of the alignment and restraint unit (5, 6, 12, 13), in particular during the entire transfer process of the mail item (P).

3. Transfer unit (1) according to claim 1 or 2, **characterized in that** the transfer unit (1) has a control apparatus for controlling the alignment and restraint unit (5, 6, 12, 13), the control apparatus being designed to control the alignment and restraint unit (5, 6, 12, 13) to assume a restraining position in which the mail item (P) is prevented from moving in the transport direction (T), and to assume a release position in which the mail item (P) can move in the transport direction (T).

4. Transfer unit (1) according to any of the preceding claims,
**characterized by** a sensor unit, in particular a sensor unit connected to a control apparatus of the transfer unit (1), for detecting a mail item (P) arranged on or at the alignment and restraint unit (5, 6, 12, 13), in particular for detecting a mail item (P) resting against the at least one guide edge (K, K').

5. Transfer unit (1) according to any of the preceding claims,
**characterized in that** the guide unit (6) has two guide edges (K, K') which are substantially at right angles to one another, the guide edges (K, K') preferably not being arranged in parallel with the retraction direction of the support (5), in particular each forming an angle of 30 to 60°, in particular of approximately 45° with the retraction direction of the support (5).

6. Transfer unit (1) according to any of the preceding claims,
**characterized in that** the alignment and restraint unit has a pushing element, in particular a pushing element which can be controlled by a control apparatus of the transfer unit (1), for moving the mail item (P) from the support (5) onto the transport device (4) and/or for assisting with the movement of the mail item (P) in the transport direction (T).

7. Transfer unit (1) according to any of the preceding claims,
**characterized in that** the guide unit (6) forms the pushing element and is therefore designed to be movable, in particular relative to the transport direction (T).

8. Transfer unit (1) according to any of claims 1 to 4, **characterized in that** the restraining elements (12, 13) are not arranged perpendicularly to the transport direction (T), and preferably forming an angle between 30° and 60°, particularly preferably each forming an angle of approximately 45° with the transport direction (T).

9. Transfer system comprising at least one transfer unit (1) according to any of the preceding claims, a feed unit (2) for feeding the mail item (P), in particular a package, along a feed direction (Z) to the transfer unit (1), and a removal unit (3) for removing the mail item (P) along a removal direction (A).

10. Transfer method for transferring a mail item (P), in particular a package, by means of a transfer unit (1) according to any of claims 1 to 8 from a feed unit (2) to a removal unit (3), comprising the steps of:
(a) feeding the mail item (P) to the transfer unit (1) by means of the feed unit (2);
(b) aligning the mail item (P) by resting it against the at least one guide edge (K, K') and temporarily restraining the mail item (P) by means of the alignment and restraint unit (5, 6, 12, 13), in particular when the transport device (4) is continuously driven to transport the mail item (P) in the transport direction (T);
(c) transporting the mail item (P) along the transport direction (T) to the removal unit (3) by means of the transport device (4).

11. Transfer method according to claim 10, **characterized by** a step of detecting when the mail item (P) is resting against the at least one guide edge (K, K') before the mail item (P) is removed by means of the transport device (4).

## Revendications

1. Unité de transfert (1) pour la réception d'un article postal (P), en particulier d'un colis, depuis une unité d'alimentation (2) et pour le transfert de l'article postal (P) à une unité d'évacuation (3), dans laquelle l'unité de transfert (1) présente un dispositif de transport (4) pour le transport de l'article postal (P) vers l'unité d'évacuation (3) le long d'une direction de transport (T) ainsi qu'une unité d'orientation et de retenue (5, 6, 12, 13), dans laquelle l'unité d'orientation et de retenue (5, 6, 12, 13) présente au moins un bord d'appui (K, K') pour l'orientation d'au moins un bord de l'article postal (P) transféré de l'unité d'alimentation (2) à l'unité de transfert (1) par rapport à la direction de transport (T) et dans laquelle l'unité d'orientation et de retenue (5, 6, 12, 13) est réalisée pour empêcher temporairement l'article postal (P) transféré à l'unité de transfert (1) de se déplacer dans la direction de transport (T) lors d'un entraînement du dispositif de transport (4) pour un transport de l'article postal (P) dans la direction de transport (T),
**caractérisée en ce que**
l'unité d'orientation et de retenue présente un support (5) disposé au-dessus du dispositif de transport (4) et pouvant être coulissé, par rapport au dispositif de transport (4), le long d'une direction d'introduction parallèle à la direction de transport (T), entre une position sortie et une position introduite, et une unité d'appui (6) présentant au moins un bord d'appui (K, K') et l'article postal (P), lors d'une alimentation depuis l'unité d'alimentation (2), est d'abord déposé sur le support (5) puis, depuis celui-ci, sur le dispositif de transport (4) et, lors du déplacement du support (5) en position introduite, vient au moins brièvement en appui sur l'unité d'appui (6), ou
**que** l'article postal (P) alimenté par l'unité d'alimentation (2) est déposé directement sur le dispositif de transport (4) et l'unité d'orientation et de retenue présente deux éléments de retenue (12, 13) présentant respectivement un bord d'appui (K, K'), disposés au-dessus du dispositif de transport (4) et pouvant pivoter autour d'un axe de rotation respectivement entre une position de retenue, dans laquelle un déplacement de l'article postal (P) dans la direction de transport (T) est empêché, et une position de libération, dans laquelle un déplacement de l'article postal (P) dans la direction de transport (T) peut être effectué, éléments de retenue sur lesquels l'article postal (P) vient en appui pour la retenue intermédiaire, dans lequel les bords d'appui (K, K') sont disposés sensiblement perpendiculairement l'un à l'autre lorsque les éléments de retenue (12, 13) sont disposés en position de retenue.

2. Unité de transfert (1) selon la revendication 1, **caractérisée en ce que** l'unité de transfert (1) présente un appareil de commande pour la commande du dispositif de transport (4), dans laquelle l'appareil de commande est configuré pour entraîner le dispositif de transport (4) pendant la retenue intermédiaire de l'article postal (P) par l'unité d'orientation et de retenue (5, 6, 12, 13), en particulier pendant l'ensemble du processus de transfert de l'article postal (P), pour un transport dans la direction de transport (T).

3. Unité de transfert (1) selon la revendication 1 ou 2, **caractérisée en ce que** l'unité de transfert (1) présente un appareil de commande pour la commande de l'unité d'orientation et de retenue (5, 6, 12, 13), dans laquelle l'appareil de commande est configuré pour commander l'unité d'orientation et de retenue (5, 6, 12, 13) pour prendre une position de retenue, dans laquelle un déplacement de l'article postal (P) dans la direction de transport (T) est empêché, et une position de libération, dans laquelle un déplacement de l'article postal (P) dans la direction de transport (T) peut être effectué.

4. Unité de transfert (1) selon l'une des revendications précédentes, **caractérisée par** une unité de détection, en particulier une unité de détection connectée à un appareil de commande de l'unité de transfert (1), pour la détection d'un article postal (P) disposé sur l'unité d'orientation et de retenue (5, 6, 12, 13), en particulier pour la détection d'un article postal (P) en appui sur l'au moins un bord d'appui (K, K').

5. Unité de transfert (1) selon l'une des revendications précédentes, **caractérisée en ce que** l'unité d'appui (6) présente deux bords d'appui (K, K') sensiblement perpendiculaires l'un à l'autre, dans laquelle les bords d'appui (K, K') ne sont de préférence pas disposés parallèlement à la direction d'introduction du support (5) et forment en particulier respectivement un angle allant de 30 à 60°, en particulier d'environ 45°, avec la direction d'introduction du support (5).

6. Unité de transfert (1) selon l'une des revendications précédentes, **caractérisée en ce que** l'unité d'orientation et de retenue présente un élément de poussée, en particulier un élément de poussée pouvant être commandé par un appareil de commande de l'unité de transfert (1), pour le déplacement de l'article postal (P) depuis le support (5) sur le dispositif de transport (4) et/ou pour l'aide au déplacement de l'article postal (P) dans la direction de transport (T).

7. Unité de transfert (1) selon l'une des revendications précédentes, **caractérisée en ce que** l'unité d'appui (6) forme l'élément de poussée et est réalisée à cet effet de manière à pouvoir être coulissée en particulier par rapport à la direction de transport (T).

8. Unité de transfert (1) selon l'une des revendications 1 à 4,
**caractérisée en ce que** les éléments de retenue (12, 13) ne sont pas disposés perpendiculairement à la direction de transport (T) et forment de préférence un angle compris entre 30° et 60°, et forment respectivement de manière particulièrement préférée un angle d'environ 45°, avec la direction de transport (T).

9. Système de transfert comprenant au moins une unité de transfert (1) selon l'une des revendications précédentes, une unité d'alimentation (2) pour l'alimentation de l'article postal (P), en particulier d'un colis, le long d'une direction d'alimentation (Z) vers l'unité de transfert (1), ainsi qu'une unité d'évacuation (3) pour l'évacuation de l'article postal (P) le long d'une direction d'évacuation (A).

10. Procédé de transfert pour le transfert d'un article postal (P), en particulier d'un colis, au moyen d'une unité de transfert (1), selon l'une des revendications 1 à 8, d'une unité d'alimentation (2) à une unité d'évacuation (3), comprenant les étapes consistant à :
(a) acheminer, par l'unité d'alimentation (2), l'article postal (P) vers l'unité de transfert (1) ;
(b) orienter l'article postal (P) en l'appuyant sur l'au moins un bord d'appui (K, K') et retenir de manière intermédiaire, par l'unité d'orientation et de retenue (5, 6, 12, 13), l'article postal (P), en particulier lors d'un entraînement continu du dispositif de transport (4), pour un transport de l'article postal (P) dans la direction de transport (T) ;
(c) transporter, par le dispositif de transport (4), l'article postal (P) le long de la direction de transport (T) vers l'unité d'évacuation (3).

11. Procédé de transfert selon la revendication 10, **caractérisé par** une étape de détection de l'appui de l'article postal (P) sur l'au moins un bord d'appui (K, K') avant l'évacuation de l'article postal (P) par le dispositif de transport (4).
